# EUROPÄISCHE PATENTSCHRIFT

(11) **EP 3 319 831 B1**
(45) Veröffentlichungstag und Bekanntmachung des Hinweises auf die Patenterteilung: **04.12.2019**
(21) Anmeldenummer: 16723991.2
(22) Anmeldetag: 10.05.2016
(51) Int. Cl.: B60K 15/03

(54) **FAHRZEUG, AUFWEISEND EINE MIT EINEM GAS BETRIEBENE BRENNKRAFTMASCHINE**
VEHICLE HAVING AN INTERNAL COMBUSTION ENGINE OPERATED BY MEANS OF A GAS
VÉHICULE PRÉSENTANT UN MOTEUR À COMBUSTION INTERNE FONCTIONNANT AU GAZ

(30) Priorität: 10.07.2015 DE 102015212988
(43) Veröffentlichungstag der Anmeldung: 16.05.2018
(73) Patentinhaber: Robert Bosch GmbH, 70442 Stuttgart (DE)
(72) Erfinder: HERZENJAK, Florian, 70469 Stuttgart (DE)
(86) Internationale Anmeldenummer: PCT/EP2016/060473
(87) Internationale Veröffentlichungsnummer: WO 2017/008935

(56) Entgegenhaltungen:
- DE-A1- 19 533 863
- DE-A1-102008 019 594
- DE-A1-102012 024 717
- DE-A1-102013 223 259
- DE-T2- 69 613 766

## Beschreibung

Die Erfindung betrifft ein Fahrzeug, aufweisend eine mit einem Gas betriebene Brennkraftmaschine, wobei das Gas unter Druck in einem Gastank bevorratet ist und bedarfsweise der Brennkraftmaschine zum Betrieb derselben zuführbar ist, und eine bei einem Überschreiten eines vorgegebenen Gasdrucks in dem Gastank aktiv werdende Sicherheitseinrichtung mit einem Überdruckventil vorgesehen ist.

### Stand der Technik

Ein derartiges Fahrzeug ist aus der DE 10 2006 052 109 A1 bekannt. Dieses Fahrzeug weist eine mit einem Gas betriebene Brennkraftmaschine auf, wobei das Gas in einem Gastank bevorratet wird. Wird in dem Gastank ein vorgegebener Gasdruck überschritten, was beispielsweise durch eine übermäßige Erwärmung aufgrund von Sonneneinstrahlung erfolgen kann, wird eine Druckentlastung des Gastanks eingeleitet. Diese Druckentlastung erfolgt über ein Überdruckventil, durch das das Gas in die Umgebung abgelassen wird.

Weitere mit Gas betriebene Brennkraftmaschinen werden in den Dokumenten DE 195 33 863 A1, DE 10 2008 019594 A1 uns DE 696 13 766 T2 beschrieben.

Der Erfindung liegt die Aufgabe zugrunde, ein gasbetriebenes Fahrzeug und ein Verfahren zum Betreiben eines solchen Fahrzeugs anzugeben, das eine verbesserte Sicherheitseinrichtung für aus einem Gastank bei Überschreiten eines Absteuergasdrucks abzulassendes Gas aufweist.

### Offenbarung der Erfindung

Diese Aufgabe wird dadurch gelöst, dass die Sicherheitseinrichtung ein Brenner zum Abfackeln des abgelassenen Gases umfasst. Das erfindungsgemäße Verfahren zum Betreiben eines derartigen Fahrzeugs sieht vor, dass die Sicherheitseinrichtung einen Brenner umfasst, und dass bei Überschreiten des vorgegebenen Absteuergasdrucks das über das Überdruckventil abgelassene Gas abgefackelt wird. Dieser Ausgestaltung beziehungsweise diesem Verfahren liegt die Erkenntnis zugrunde, dass eine bisherige Sicherheitseinrichtung das Gas bei einer beispielsweise durch Sonneneinstrahlung eingetretenen Temperaturerhöhung und dadurch erfolgten Verdampfung des Gases unter gleichzeitiger Druckerhöhung das Gas in die Umgebung abgelassen wird, bis der Gasdruck in dem Gastank wieder einen zulässigen Wert erreicht. Hierbei erfolgt keine Rücksichtnahme auf die Umwelt, was insbesondere dann kritisch ist, wenn das Gas als Treibhausgas gilt. Dies ist beispielsweise bei Methan der Fall. Steht das Fahrzeug zudem in einem schlecht gelüfteten Raum, können Gefährdungen durch ein sich bildendes explosives Gemisch hervorgerufen werden. Dadurch, dass das abgesteuerte Gas erfindungsgemäß in einem Brenner abgefackelt wird, sind die zuvor dargestellten Gefährdungen ausgeschaltet.

In Weiterbildung der Erfindung weist der Brenner eine Zündeinrichtung auf. Diese Zündeinrichtung ist so ausgebildet, dass diese automatisch betätigt wird, wenn in den Brenner ein Gas, insbesondere Methan, eingeleitet wird. Beispielsweise kann die Zündeinrichtung in Form einer Piezozündeinrichtung ausgebildet sein.

Erfindungsgemäß ist ein Steuergerät zur Inbetriebnahme des Brenners vorgesehen, wobei das Steuergerät in Abhängigkeit eines in dem Gastank herrschenden Gasdrucks aktivierbar ist. Dabei erfolgt die Aktivierung des Steuergeräts vorzugsweise rechtzeitig vor Erreichen des vorgeben Absteuergasdrucks, um nachfolgend erläuterte Maßnahmen durchzuführen. Beispielsweise erfolgt eine Aktivierung des Steuergeräts bei Überschreiten einer Schwelle von circa 80 % des vorgegebenen Absteuergasdrucks, bei dem das Gas über das Überdruckventil abgeleitet wird.

Erfindungsgemäß werden dem Steuergerät Signale von zwei (oder mehr) Lichtsensoren zugeführt. Diese Lichtsensoren sind entfernt voneinander angeordnet. Dadurch kann detektiert werden, ob das Fahrzeug beispielsweise in einer Halle oder im Freien unter einem Baum steht. Werden beide Lichtsensoren zur gleichen Zeit einer konstanten gleichen Lichtintensität ausgesetzt, ist von einem Standplatz beispielsweise in einer Halle auszugehen. Schwankt die von den beiden Lichtsensoren ermittelte Lichtintensität untereinander, ist davon auszugehen, dass das Fahrzeug im Freien beispielsweise unter einem Baum abgestellt ist.

In weiterer Ausgestaltung der Erfindung wird dem Steuergerät zusätzlich ein Signal eines Temperatursensors zugeführt. Dadurch kann eine weiter verbesserte Auswertung bezüglich des möglichen Standortes des Fahrzeugs erreicht werden. Werden beide Lichtsensoren zur gleichen Zeit mit einer konstanten Lichtintensität beaufschlagt und ist die Temperatur über einen vorgegebenen Zeitraum, beispielsweise ein bis zwei Tage, einigermaßen konstant, kann mit hoher Wahrscheinlichkeit von einem Standplatz in einer Halle ausgegangen werden. Schwankt dagegen die von den Lichtsensoren ermittelte Lichtintensität untereinander oder ändert sich diese über eine konstante Zeit mit einem Zeitversatz, wobei zusätzlich eine Änderung der Temperatur ermittelt wird, steht das Fahrzeug beispielsweise unter einem Baum oder einer Brücke.

In weiterer Ausgestaltung der Erfindung sind der zumindest eine Lichtsensor und/oder Temperatursensor an einem zur Umgebung ungeschützt freien Bereich des Fahrzeugs, insbesondere auf einem Dach des Fahrzeugs, angeordnet. Beispielsweise wird hierzu das Dach des Führerhauses oder ein auf dem Dach montierter Spoiler des Fahrzeugs herangezogen.

In weiterer Ausgestaltung der Erfindung ist ein bei einer Inbetriebnahme des Brenners angesteuerter akustischer Signalgeber vorgesehen. Dieser akustische Signalgeber kann grundsätzlich immer bei einer Aktivierung des Brenners angesteuert werden oder aber auch nur dann, wenn ermittelt wird, dass das Fahrzeug mit hoher Wahrscheinlichkeit in einem geschlossenen Raum steht. Durch dieses Signal wird auf mögliche Gefahren hingewiesen.

In weiterer Ausbildung ist eine Sauerstoffmesseinrichtung vorgesehen. Diese Sauerstoffmesseinrichtung misst die Sauerstoffkonzentration der Umgebung und ermöglicht somit eine zusätzliche Steuerfunktion des Steuergeräts. Beispielsweise kann der für die Abfackelung des Gases notwendige Sauerstoff einem Druckluftbehälter entnommen werden, aus dem Druckluftbehälter wird Sauerstoff zur Verdünnung des Abgases in die Umgebung abgelassen und/oder der Abfackelvorgang wird gestoppt.

Weitere vorteilhafte Ausgestaltungen der Erfindung sind der Zeichnungsbeschreibung zu entnehmen, in der ein in den Figuren dargestelltes Ausführungsbeispiel der Erfindung näher beschrieben ist.

Es zeigen:
- Figur 1: eine schematische Seitenansicht eines Fahrzeugs, das eine gasbetriebene Brennkraftmaschine mit einer erfindungsgemäß ausgestatteten Sicherheitseinrichtung aufweist und
- Figur 2: eine schematische Ansicht eines Dachs eines Fahrzeugs mit darauf angeordneten Sensoren.

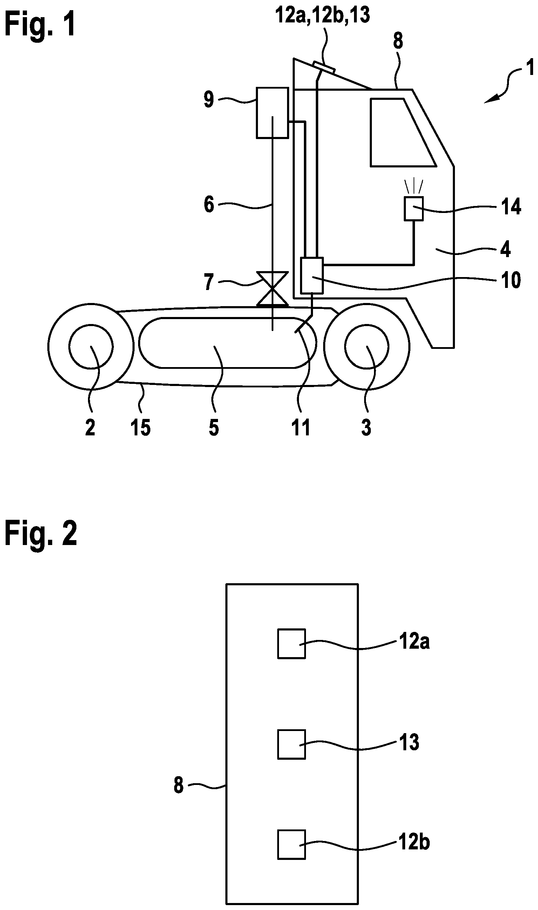

Figur 1 zeigt eine rein schematische Seitenansicht eines Fahrzeugs, das beispielsweise eine Zugmaschine eines Nutzfahrzeugs sein kann. Das Fahrzeug 1 weist einen Rahmen 15 mit einer Hinterradachse 2 und einer Vorderradachse 3 auf, wobei über der Vorderradachse 3 ein Fahrerhaus 4 angeordnet und an dem Rahmen 15 befestigt ist. In dem Fahrzeug 1 ist eine nicht dargestellte Brennkraftmaschine verbaut, die mit einem in einem Gastank 5 bevorrateten Gas, beispielsweise Methan, betrieben wird. Dabei kann das Gas (nach der Entnahme aus dem Gastank 5) der Brennkraftmaschine im flüssigen oder gasförmigen Zustand zugeführt werden. Dies hängt von dem Gas und/oder der Steuerung des entsprechenden Einspritzsystems ab. Die Brennkraftmaschine wirkt beispielsweise über ein Getriebe mit der Hinterradachse 2 zum Antrieb des Fahrzeugs 1 zusammen.

In dem Gastank 5 wird das Gas im flüssigen Zustand bevorratet. Bei einer längeren Standzeit des Fahrzeugs 1 unter Sonneneinstrahlung auf den Gastank 5 kann in dem Gastank 5 ein Überdruck entstehen, der aufgrund einer Verdampfung des flüssigen Gases entsteht. Um eine unzulässig hohe Druckzunahme in dem Gastank 5 zu vermeiden, ist eine Sicherheitseinrichtung vorgesehen, die eine mit dem Gastank 5 zusammenwirkende Abführleitung 6 mit einem Überdruckventil 7 umfasst. Das Überdruckventil 7 kann alternativ auch direkt in dem Gastank 5 integriert sein. Die Abführleitung 6 ist beispielsweise bis in Höhe eines Daches 8 des Fahrerhauses 4 geführt und weist in diesem Bereich einen Brenner 8 mit einer integrierten Zündeinrichtung vor. Weiterhin ist an geeigneter Stelle des Fahrzeugs, beispielsweise in dem Fahrerhaus 4, ein Steuergerät 10 angeordnet, das insbesondere den Betrieb des Brenners 9 steuert. Dem Steuergerät 10 werden Signale eines Drucksensors 11 und von im Bereich des Dachs 8 angeordneten Lichtsensoren 12a, 12b und eines Temperatursensors 13 (siehe auch Figur 2) zugeführt. Die Lichtsensoren 12a, 12b sind beabstandet voneinander entweder direkt auf dem Dach 8 oder auf einer an dem Dach angeordneten Einrichtung, beispielsweise einem Spoiler, angeordnet, so dass diese unterschiedliche Lichtsignale empfangen, wenn das Fahrzeug 1 unter einer bewegten Abdeckung abgestellt ist, wie dies beispielsweise bei einen Baum mit im Wind bewegten Blättern der Fall ist.

Die Funktion des erfindungsgemäßen Systems ist nachfolgend beschrieben:
Der Drucksensor 11 detektiert in dem Gastank 5 einen Gasdruck, der beispielsweise einen Wert von circa 80 % eines vorgegebenen Absteuergasdrucks, bei dem das Überdruckventil 7 Gas in die Abführleitung 6 absteuert, liegt. Dieser gegenüber dem Normalgasdruck erhöhte Gasdruck stellt sich insbesondere bei einer Sonneneinstrahlung auf den Gastank 5 ein, wobei infolge der Sonneneinstrahlung das bevorratete flüssige Gas erwärmt wird und zunehmend verdampft. Bei diesem ersten Betriebszustand wird das Steuergerät 10 mit den Lichtsensoren 12a, 12b und dem Temperatursensor 13 aktiviert, das über ein Zeitintervall die aufgenommenen Signale der Lichtsensoren 12a, 12b und das Signal des Temperatursensors 13 auswertet. Sind beispielsweise die von den Lichtsensoren 12a, 12b aufgenommenen Signale nahezu identisch und der von dem Temperatursensor 13 aufgenommene Signal einigermaßen konstant, wird davon ausgegangen, dass das Fahrzeug 1 beispielsweise in einer Halle abgestellt ist, in die die Sonneneinstrahlung (beispielsweise durch ein Glasdach) eindringt. Schwanken aber insbesondere die von den Lichtsensoren 12a, 12b aufgenommen Werte untereinander und/oder weisen die von dem Temperatursensor 13 aufgenommenen Signale über ein vorgegebenes Zeitintervall von beispielsweise einem oder zwei Tag(en) sich deutlich unterscheidende Werte auf, wird davon ausgegangen, dass das Fahrzeug im Freien, beispielsweise unter einem Baum oder einer Brücke steht. Diese gewonnen Informationen werden zur Steuerung des Brenners und/oder eines akustischen Signalgebers 14 herangezogen.

So wird von dem Steuergerät 10 sichergestellt, dass bei einer weiteren Druckerhöhung des Gases in dem Gastank 5 und bei Erreichen des vorgegebenen Absteuergasdrucks, bei dem das Überdruckventil 7 automatisch öffnet und Gas aus dem Gastank 5 in die Abführleitung 6 absteuert, die Zündungseinrichtung des Brenners 9 betätigt wird und das in den Brenner 9 einströmende Gas entzündet, so dass dieses unter Zuführung von Sauerstoff (Umgebungsluft) kontrolliert abgefackelt wird. Dadurch erfolgt keine Umweltbeeinträchtigung durch die Vermischung eines als Treibhausgas geltenden Gases, beispielsweise Methan, mit der Umgebungsluft.

Zumindest wenn - wie dies zuvor erläutert worden ist - ermittelt wird, dass das Fahrzeug 1 in einer Halle steht, wird zusätzlich durch den Signalgeber 14 ein akustisches Signal abgegeben, das über mögliche Gefährdungen unterrichtet, die durch insbesondere einen Sauerstoffentzug in der Halle und die bei dem Abfackelvorgang entstehenden Abgase entstehen. Um den Sauerstoffentzug zu kompensieren kann der für die Verbrennung notwendige Sauerstoff einem Druckluftbehälter, der an dem Fahrzeug verbaut ist, entnommen werden.

## Patentansprüche

1. Fahrzeug (1), aufweisend eine mit einem Gas betriebene Brennkraftmaschine, wobei das Gas unter Druck in einem Gastank (5) bevorratet ist und bedarfsweise der Brennkraftmaschine zum Betrieb derselben zuführbar ist, und eine bei einem Überschreiten eines vorgegebenen Absteuergasdrucks in dem Gastank (5) aktiv werdende Sicherheitseinrichtung mit einem Überdruckventil (7) zum Ablassen von Gas aus dem Gastank (5) vorgesehen ist, wobei die Sicherheitseinrichtung einen Brenner (9) zum Abfackeln des abgelassenen Gases umfasst, **dadurch gekennzeichnet, dass** ein Steuergerät (10) zur Inbetriebnahme des Brenners vorgesehen ist, wobei das Steuergerät (10) in Abhängigkeit eines in dem Gastank (5) herrschenden Gasdrucks aktivierbar ist, wobei dem Steuergerät (10) zumindest Signale von zwei Lichtsensoren (12a, 12b) zugeführt werden.

2. Fahrzeug (1) nach Anspruch 1,
**dadurch gekennzeichnet, dass** der Brenner (9) eine Zündeinrichtung aufweist.

3. Fahrzeug (1) nach Anspruch 1 oder 2,
**dadurch gekennzeichnet, dass** dem Steuergerät (10) ein Signal eines Temperatursensors (13) zugeführt wird.

4. Fahrzeug (1) nach einem der vorherigen Ansprüche ,
**dadurch gekennzeichnet, dass** die Lichtsensoren (12a, 12b) und/oder Temperatursensor (13) an einem zur Umgebung ungeschützt freien Bereich des Fahrzeugs (1), insbesondere auf einem Dach (8) des Fahrzeugs (1) angeordnet sind.

5. Fahrzeug (1) nach einem der vorherigen Ansprüche,
**dadurch gekennzeichnet, dass** ein bei einer Inbetriebnahme des Brenners (9) von dem Steuergerät (10) angesteuerter akustischer Signalgeber (14) vorgesehen ist.

6. Fahrzeug (1) nach einem der vorherigen Ansprüche,
**dadurch gekennzeichnet, dass** eine mit dem Steuergerät verbundene Sauerstoffmesseinrichtung vorgesehen ist.

7. Verfahren zum Betreiben eines Fahrzeugs (1), aufweisend eine mit einem Gas betriebene Brennkraftmaschine, wobei das Gas unter Druck in einem Gastank (5) bevorratet ist und bedarfsweise der Brennkraftmaschine zum Betrieb derselben zuführbar ist, und eine bei einem Überschreiten eines vorgegebenen Absteuergasdrucks in dem Gastank (5) aktiv werdende Sicherheitseinrichtung mit einem Überdruckventil (7) vorgesehen ist,
**wobei** die Sicherheitseinrichtung einen Brenner (9) umfasst, und dass bei Überschreiten des vorgegebenen Absteuergasdrucks das über das Überdruckventil (7) abgelassene Gas in dem Brenner (9) abgefackelt wird,
**dadurch gekennzeichnet, dass** durch Auswertung von einem Steuergerät (10) zugeführten Signalen von Lichtsensoren (12a, 12b)) und eines Temperatursensors (13) ermittelt wird, ob das Fahrzeug (1) im Freien oder in einer Halle abgestellt ist.

## Claims

1. Vehicle (1) having an internal combustion engine operated by means of a gas, wherein the gas is stored under pressure in a gas tank (5) and is capable of being fed to the internal combustion engine as needed for the operation of the internal combustion engine, and a safety device having a pressure relief valve (7) for the release of gas from the gas tank (5) is provided, which safety device becomes active when a specified discharge gas pressure is exceeded in the gas tank (5), wherein the safety device includes a burner (9) for flaring the released gas, **characterized in that** a control unit (10) for operating the burner is provided, wherein the control unit (10) can be activated depending on a gas pressure prevailing inside the gas tank (5), wherein at least signals from two light sensors (12a, 12b) are supplied to the control unit (10).

2. Vehicle (1) according to Claim 1,
**characterized in that** the burner (9) exhibits an ignition device.

3. Vehicle (1) according to Claim 1 or 2,
**characterized in that** a signal from a temperature sensor (13) is supplied to the control unit (10).

4. Vehicle (1) according to one of the preceding claims,
**characterized in that** the light sensors (12a, 12b) and/or the temperature sensor (13) are disposed on an exposed area of the vehicle (1) that is unprotected from the environment, in particular on a roof (8) of the vehicle (1) .

5. Vehicle (1) according to one of the preceding claims,
**characterized in that** an acoustic signal generator (14) is provided, which signal generator is controlled by the control unit (10) in the event of the operation of the burner (9).

6. Vehicle (1) according to one of the preceding claims,
**characterized in that** an oxygen measuring device connected to the control unit is provided.

7. Method for operating a vehicle (1), having an internal combustion engine operated by means of a gas, wherein the gas is stored under pressure in a gas tank (5) and is capable of being fed to the internal combustion engine as needed for the operation of the internal combustion engine, and a safety device having a pressure relief valve (7) is provided, which safety device becomes active when a specified discharge gas pressure is exceeded in the gas tank (5), **wherein** the safety device includes a burner (9), and in that, when the specified discharge gas pressure is exceeded, the gas released via the pressure relief valve (7) is flared in the burner (9), **characterized in that** a determination is made of whether the vehicle (1) is parked in the open or inside a hangar by the evaluation of signals from light sensors (12a, 12b) and from a temperature sensor (13) supplied to a control unit (10).

## Revendications

1. Véhicule (1) comprenant un moteur à combustion interne à gaz, le gaz étant stocké sous pression dans un réservoir à gaz (5) et amené, selon le besoin, au moteur à combustion interne pour faire fonctionner celui-ci, et un dispositif de sécurité activé lorsque la pression de gaz de désactivation prédéterminée dans le réservoir à gaz (5) est dépassée et muni d'une soupape de surpression (7) étant prévue pour évacuer le gaz du réservoir à gaz (5), le dispositif de sécurité comprenant un brûleur (9) destiné à brûler le gaz évacué, **caractérisé en ce qu'**une unité de commande (10) est prévue pour mettre en service le brûleur, l'unité de commande (10) pouvant être activée en fonction d'une pression de gaz régnant dans le réservoir à gaz (5), au moins des signaux provenant de deux capteurs de lumière (12a, 12b) étant amenés à l'unité de commande (10).

2. Véhicule (1) selon la revendication 1,
**caractérisé en ce que** le brûleur (9) comporte un dispositif d'allumage.

3. Véhicule (1) selon la revendication 1 ou 2,
**caractérisé en ce qu'**un signal d'un capteur de température (13) est amené à l'unité de commande (10).

4. Véhicule (1) selon l'une des revendications précédentes,
**caractérisé en ce que** les capteurs de lumière (12a, 12b) et/ou le capteur de température (13) sont disposés dans une zone libre du véhicule (1) qui n'est pas protégée par rapport à l'environnement, en particulier sur le toit (8) du véhicule (1).

5. Véhicule (1) selon l'une des revendications précédentes,
**caractérisé en ce qu'**il est prévu un émetteur de signal acoustique (14) commandé par l'unité de commande (10) lors de la mise en service du brûleur (9).

6. Véhicule (1) selon l'une des revendications précédentes,
**caractérisé en ce qu'**il est prévu un dispositif de mesure d'oxygène relié à l'unité de commande.

7. Procédé de fonctionnement d'un véhicule (1), comprenant un moteur à combustion interne à gaz, le gaz étant stocké sous pression dans un réservoir à gaz (5) et pouvant être amené, selon le besoin, au moteur à combustion interne pour faire fonctionner celui-ci, et un dispositif de sécurité muni d'une soupape de surpression (7) étant prévu qui est activé lorsqu'une pression de gaz de désactivation prédéterminée dans le réservoir de gaz (5) est dépassée, le dispositif de sécurité comprenant un brûleur (9) et le gaz évacué par le biais de la soupape de surpression (7) étant brûlé dans le brûleur (9) lorsque la pression de gaz de désactivation prédéterminée est dépassée, **caractérisé en ce que** l'évaluation de signaux, provenant de capteurs de lumière (12a, 12b) et amenés à une unité de commande (10), et d'un capteur de température (13) permet de déterminer si le véhicule (1) est garé à l'extérieur ou dans un bâtiment.
